# EUROPEAN PATENT APPLICATION

(11) **EP 1 803 962 A2**
(43) Date of publication of application: **04.07.2007**
(21) Application number: 06077038.5
(22) Date of filing: 16.11.2006
(51) Int. Cl.: F16F 15/00

(54) **Active/passive stand-alone devices for vibration control and damage detection**

(30) Priority: 30.12.2005 ES 200503246
(71) Applicant: Gamesa Desarrollos Aeronauticos, S.A., 01510 Miñano (Alava) (ES)
(72) Inventor: Kawiecki, Grzegorz, Gamesa Desarrollos Aeron., 01510 Minano (Alava) (ES); Pena Macias, Julio, Gamesa Desarrollos Aeron., 01510 Minano (Alava) (ES)

(57) **Abstract**

This invention is referring to active/passive self-powered - they do not need for external power supply - devices for vibration control and damage detection in structures. The combination of active elements (1) (piezoelectrics in this invention, but not limited to these) and passive elements (2) (viscoelastics in this invention, but not limited to these) makes possible to join together a system for vibration control with a system for structural damage detection based in the anomalies detection in the elastic waves propagation, in changes of electro mechanic impedance or in others changes of the characteristics or the environment of the active elements, and allowing the system to abstain from external power supply depending on the configuration and the inherent vibration level.

The application of this invention is the vibration control and damage detection in aeronautic and thin-plate structures in general.

## Description

### Summary of the invention

The present invention is based on the use of an active / passive devices network for vibration control and damage detection in the structures and in the application of the electric power generated by means of piezoelectric effect within the network devices for their own power supply.

The active / passive devices for vibration control and damage detection in structures, subject of this invention, can be of piezoviscoelastic type, although this invention is not limited to this material type, it will be used in this embodiment. The development of this application of piezoviscoelastic devices attempts to achieve these two objectives, completely differents, using the same physical system.

On the one hand this invention is based in the active / passive devices used for damage detection,
- through anomalies detection in the elastic waves or
- through monitoring of electro mechanic impedance of these device or
- through others changes of the characteristics or the environment of the active elements, for example, and
the vibration control by means of the device's viscoelastic components characteristics controlled by an external system through piezoelectric elements, and on the other hand it is based in the use of the electric energy generated by the piezoelectric material to power supply the network.

The system and method of vibrations damping and damage detection here developed can be applied, although it is not limited, in the aeronautic or others thin-plate structures, in general.

### Background of the invention

There are a lot of patents related to vibration control using piezoviscoelastic devices and with transformation of the vibration mechanic energy in electric energy.

The US 545053 patent is referred to a vibration control system based in piezoviscoelastic devices. There are important reductions of the vibration level, but it's not stand-alone system.

The damping system exposed in the US 6598717 patent shows an improved version of the previous system, but the stand-alone function is not included either. Nevertheless, the system achieves higher dumping levels.

The WO 2005010496 (US 2004150529) patent is referred to a monitoring system composed of a transformation device of the vibration mechanic energy in electric energy connected to a sensors system applied to the structural monitoring.

The US 2005012434 patent application describes a system to convert the mechanical vibration energy into electric energy. The system is based on a piezoelectric transducer attached to a structure that converts mechanic loads in electric loads and in a circuit in order to transform the electric loads in useful electric energy. The system includes a spacer that protects the piezotransducers against mechanic overloads.

The US 2003197448 patent application describes a system to transform mechanical vibration energy into electric energy, based on many plates of piezoelectric material attached to a vibration source.

The WO 2004077652 is referred to a system for electric impulses production through a device that impacts a piezo-crystal with a hammer.

The GB 2378547 patent describes an electric energy production system using a piezotransducer joined to an elastic membrane. One impulse applied in the elastic element excites a transitory vibration in its first characteristic mode and, therefore, the deformation of the joined piezoelement. Electric energy generated by this way is referred.

The WO 2003095244 patent describes a system of electric energy production by means of installed piezoelectrics in tyres.

### Description of the invention

The safety level increment and the maintenance costs reduction requirements entail the need for the vibration control and damage detection systems installation in the structures. The installation of these systems always increases the weight and the complexity level of the structure due to both, the devices network and the need to have a current supply.

An objective of the present invention is to combine a vibration control system with a damage detection system based in the anomalies detection in the elastic waves propagation, or in changes of the electro mechanical impedance or in others changes of the characteristics or the environment of the active elements.

Other objective of this invention is to use the generated electric energy by means of the devices network, suppressing the need for external systems of power supply. The complete electric autonomy of the proposed system is a function of the device configuration and the vibration energy levels, and it can supply the necessary energy for both damage detection and structural monitoring functions.

A practical realization of this invention is composed of passive elements (made in viscoelastic material for this report, but not limited to these), designed for the vibration energy dissipation, and active components (made in piezoelectric material), designed for increasing of the dissipated energy level by the passive elements. The active elements can modify the passive elements behaviour, and they can also monitor the structure through anomalies detection in the propagation of the elastic waves generated by the active elements or using the others above-mentioned methods. The elastic wave reception and emission capability of the piezoelectric elements allows the use of the piezoviscoelastic devices for damage detection in the structure.

Due to the dependency of the transmitted elastic wave between two transducers on the physic properties of the media, the waves are affected by the possible structural damages. Any anomaly in the transmissibility function contains, therefore, information about the structural anomalies in the path of the propagating wave.

The active elements of the devices, due to their piezoelectric condition, generate electric energy when they are deformed and allow the self-power of the devices network.

If the generated energy were not enough to complete self-power of the network, it would be necessary to add a power supply system to guarantee the sufficient power in the actuator elements in order to obtain the desired deformation levels

From the above mentioned, the following advantage is extracted: the new application of these active / passive devices is able to develop, simultaneously, the vibration control and the damage monitoring functions, self-powered or using an additional system of power supply.

### Brief description of the drawings

The included figure can aid to explain the present invention, supporting in graphic form the showed descriptions.

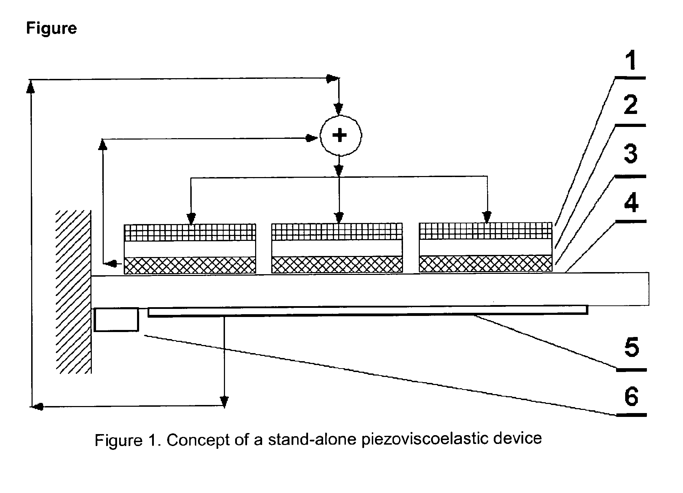

Figure 1: diagram of a possible configuration of the piezoviscoelastic device, where (1) is the constraining active sheet or actuator (piezoelectric), (2) the viscoelastic sheet, (3) the sensor sheet (piezoelectric), (4) is the base structure, (5) is the device to transform vibration energy into electric energy and (6) is a control element of the power supply among the different parts of the device.

### Description of preferred embodiments of the invention

The system, aim of this patent, includes:

A network of devices composed of passive elements (viscoelastics in this application, but not limited to these), able to dissipate energy, and active elements (piezoelectrics in this application, but not limited to these), able to generate and receive elastic waves in the structure. These devices can be installed on the damped / monitored structure mounted to the surface or embedded in the structure. Furthermore, it includes a device to transform mechanical vibration energy into electric energy, which supplies the energy to a data transmission system for monitoring the structure and it supplies electric energy for the constrictor sheet activation, if the device isn't completely self-sufficient.

The figure 1, where (1) is the constraining active sheet or actuator (piezoelectric), (2) is the viscoelastic sheet, (3) is the sensor sheet (piezoelectric) and (4) is the base structure, shows a possible configuration of the piezoviscoelastic device. Other possible configuration of the device pass through installing the sensor sheet (3) apart from viscoelastic material (2) and active constraining (1) sheets: e.g., install the sensor sheet (3) on the opposite surface of the structure instead of on the same surface of the viscoelastic material (2) and active (1) sheets. The element to transform vibration energy into electric energy (5) can be installed where it's showed or where it is advisable for its function.

The dimensions and distribution of the sheets in the developed system depends on different parameters, such as:
- geometric characteristics of the base structure to monitor,
- material of the base structure,
- expected vibration levels,
- number and materials of devices to install, and, but not limited to,
- expected damage types

For vibration control propose, being a device network as the one showed in the figure 1, if the base structure (4) vibrates, this vibration strains the sensor sheet (3) according to the vibration. This deformation generates two effects: on the one hand, it stretches directly the viscoelastic sheet (2), which is placed on the sensor sheet (3), absorbing part of the structure vibration, on the other hand, due to piezoelectric material, the deformation generates electric energy that is used in the activation of the constraining sheet (1), that is attached to the sheet (2), stretching it, and therefore controlling the vibration of the base structure (4).

To transmit the electric power between the sensor sheet (3) and the constrictor sheet (1), they both are connected by not represented wires. This electric circuit includes an electronic system for phase controlling and electric signal conditioning.

The device to transform the mechanical vibration energy into electrical energy generates the necessary power for the data transmission system and the constraining sheet if the power generated by the device network were insufficient.

A practical realization for damage detection is based in the generation of elastic waves with the desired characteristics (amplitude and frequency) through the excitation of the device's sensor elements, through a frequencies sweep, which is of a different order of magnitude than the fundamental frequencies of the structural vibration, and then interference problems are avoided.

The generated elastic waves travel through the monitored structure to the sensor elements of the devices network. The obtained data for each sensor allows to identify and to locate the damages in the base structure and their evolution in time through changes in the electro mechanical impedance or other characteristics of the active elements or their environment characteristics

The method, subject of this patent, include:

The installation of one or several devices of dual use: damping / damage monitoring, surface mounted or embedded in the structure to monitor.

The vibration control in the base structure, through the control of the deformation of the viscoelastic sheet, that is a component of the devices, by means of the actuation on the actuator sheet using the generated electrical energy by the piezoelectric material of the devices and the supply, if it is needed, of the external electrical generation system.

The generation of elastic waves with the desired characteristics (duration, amplitude and frequency) through the excitation of the device's sensor elements, through a frequencies sweep which is of a different order of magnitude than the fundamental frequencies of the structural vibration.

The data collection of the generated elastic waves to measure changes in the electro mechanical impedance or others characteristics of the active elements or the environment characteristics in order to detect the possible damages in the structure and their evolution in time.

## Claims

1. - Active / passive stand-alone devices for vibration control and damage detection of those that are distributed surface mounted or embedded in the monitored structure, **characterized by**, at least, two active elements (sensor and actuator), designed in order to send and to receive elastic waves, and a passive element designed to the control of the vibrations in the base structure, the actuator must be in contact with the passive elements and the remaining active elements must be in contact with the base structure but there is no need the contact with the passive element.

2. - The active / passive stand-alone devices for vibration control and damage detection and monitoring in the structure according to claim 1, comprising the fact that the actuator must be in contact with the passive element and the remaining active elements, sensors, must be in contact with the base structure but there is no need to be in contact with the passive element.

3. - The active / passive stand-alone devices for vibration control and damage detection and monitoring in the structure according to claim 2, comprising the fact that the active / passive devices network is the same for damage detection and vibrations of the base structure control.

4. - The active / passive stand-alone devices for vibration control and damage detection and monitoring in the structure according to claim 3, comprising the possibility to be surface mounted or embedded in the monitored structure, and following a particular distribution that depends on:
- the geometric characteristics of the base structure,
- the material of the base structure,
- the expected vibration levels, and
- the expected damage types, but not limited to these.

5. - The active / passive stand-alone devices for vibration control and damage detection and monitoring in the structure according to claim 4, comprising the fact that to detect and monitor the damages, an active element of the devices is excited by means of a frequencies sweep, a pulse or other electric signal, generating elastic waves that propagate through the base structure and are received by other active elements for data processing and detection of anomalies that reveal the presence and the characteristics of the structural damage.

6. - The active / passive stand-alone devices for vibration control and damage detection and monitoring in the structure according to claim 5, comprising the fact that when used for the vibration control, the active sheet (sensor) in contact with the base structure, when deformed due to the vibration, sends the information of the vibration to the external control system.

7. - The active / passive stand-alone devices for vibration control and damage detection and monitoring in the structure according to claim 6, comprising the fact that, when used for the vibration control, the active element (actuator), in contact with the passive element of one device, when deformed due to the controlled signal emitted through an external control system, deform the viscoelastic element, in contact with it, such that the vibration energy is absorbed, partially, by the device.

8. - The active / passive stand-alone devices for vibration control and damage detection and monitoring in the structure according to claim 7, comprising the fact that, for vibration control, the active element (actuator) in contact with the passive element of one device, when it become deformed because of the controlled signal emitted through an external control system, deforms the viscoelastic element in contact with it, controlling, in this way, the vibration energy transferred to the base structure by the device.

9. - The active / passive stand-alone devices for vibration control and damage detection and monitoring in the structure according to claim 8, comprising that the electric signal generated by the devices is transmitted through an electronic system for phase controlling and electric signal setting up.

10. - The active / passive stand-alone devices for vibration control and damage detection and monitoring in the structure according to claim 9, that includes a data transmission system supplied by a system that transforms mechanical vibration energy into electrical energy.

11. - The active / passive stand-alone devices for vibration control and damage detection and monitoring in the structure according to claim 10, including a system, which transforms mechanical vibration energy into electrical energy, and supplies the energy for the actuator elements that it is not generated by the piezoelectric effect.
